# EUROPÄISCHE PATENTSCHRIFT

(11) **EP 3 014 816 B1**
(45) Veröffentlichungstag und Bekanntmachung des Hinweises auf die Patenterteilung: **01.05.2019**
(21) Anmeldenummer: 14727466.6
(22) Anmeldetag: 28.05.2014
(51) Int. Cl.: H04L 12/40, H04L 12/24, H04L 12/26, H04L 12/46, G05B 23/02, G05B 19/042, G06F 13/40, G06F 13/42

(54) **FELDBUSKOPPLER ZUR ANBINDUNG VON EIN-/AUSGANGSMODULEN AN EINEN FELDBUS UND BETRIEBSVERFAHREN FÜR EINEN FELDBUSKOPPLER**
FIELD BUS COUPLER FOR CONNECTING INPUT/OUTPUT MODULES TO A FIELD BUS, AND METHOD OF OPERATION FOR A FIELD BUS COUPLER
COUPLEUR DE BUS DE TERRAIN SERVANT À RELIER DES MODULES D'ENTRÉE/SORTIE À UN BUS DE TERRAIN ET PROCÉDÉ DE FONCTIONNEMENT D'UN COUPLEUR DE BUS DE TERRAIN

(30) Priorität: 24.06.2013 DE 102013106572
(43) Veröffentlichungstag der Anmeldung: 04.05.2016
(73) Patentinhaber: Weidmüller Interface GmbH & Co. KG, 32758 Detmold (DE)
(72) Erfinder: KRONER, Michael, 33813 Oerlinghausen (DE); GRIESE, Björn, 33102 Paderborn (DE)
(74) Vertreter: Kleine, Hubertus
(86) Internationale Anmeldenummer: PCT/EP2014/061076
(87) Internationale Veröffentlichungsnummer: WO 2014/206680

(56) Entgegenhaltungen:
- DE-A1- 19 961 478
- US-A1- 2010 070 748

## Beschreibung

Die Erfindung betrifft ein Verfahren zum Betreiben eines Feldbuskopplers zur Anbindung von Ein-/Ausgangsmodulen an einen Feldbus eines industriellen Automatisierungssystems über einen Subbus. Die Erfindung betrifft weiterhin einen zur Durchführung eines derartigen Verfahrens geeigneten Feldbuskoppler.

In industriellen Automatisierungssystemen werden Feldbusse zur Übertragung von Steuerungsdaten und/oder Messwerten zwischen einem oder mehreren zentralen Steuerungsrechnern, auch Leitrechner oder speicherprogrammierbare Steuerung (SPS) genannt, und Feldgeräten ausgetauscht. Neben anderen gehören zu den Feldgeräten Ein- und Ausgangsmodule, nachfolgend abgekürzt I/O (input/output)-Module, die analoge und/oder digitale Ein- und/oder Ausgangskanäle bereitstellen, über die Anlagenkomponenten gesteuert werden können und Messwerte, beispielsweise von Sensoren, eingelesen werden können. Häufig wird dabei nicht jedes einzelne Feldgerät unmittelbar an den Feldbus angeschlossen, sondern über einen eingangs genannten Feldbuskoppler, der eine Datenschnittstelle zwischen dem Feldbus einerseits und einem häufig proprietären Subbus andererseits darstellt. An den Subbus kann eine Mehrzahl von busfähigen Modulen, beispielsweise die genannten I/O-Module, angekoppelt werden.

Ein solcher Feldbuskoppler, auch Feldbus-Gateway genannt, dient in der Regel auch der Konfiguration der angeschlossenen Module. Zu diesem Zweck ist häufig ein Webserver im Feldbuskoppler vorhanden, über den der Feldbuskoppler selbst, sowie die angeschlossenen Module mittels eines in einem externen (Service-) Rechner ausgeführten Webbrowsers konfiguriert werden. Üblicherweise ist zu diesem Zweck eine Serviceschnittstelle, beispielsweise eine USB (universal serial bus) -Datenschnittstelle am Feldbuskoppler vorgesehen, über die die Konfiguration des Feldbuskopplers vor Ort zum Beispiel durch einen Servicetechniker erfolgen kann.

Im Betrieb des industriellen Automatisierungssystems empfängt der Feldbuskoppler Ausgangswerte für die einzelnen I/O-Module über den Feldbus und gibt diese über den Subbus an das entsprechende I/O-Modul weiter, das seine Ausgangskanäle entsprechend einstellt. Umgekehrt werden vom I/O-Modul ausgewertete Signale, beispielsweise Sensorsignale, in Eingangswerte umgesetzt und über den Subbus an den Feldbuskoppler übertragen. Dieser gibt die Eingangswerte über den Feldbus an das übergeordnete Steuerungssystem weiter.

Bei der Inbetriebnahme oder der Fehlersuche in einem derartigen System ist es häufig hilfreich oder unerlässlich, bestimmte Ausgangswerte für einen Ausgangskanal eines I/O-Moduls unabhängig vom eigentlichen Programmablauf des Steuerungsprogramms vorzugeben und/oder eine Reaktion des Steuerprogramms auf bestimmte Eingangssignale testen zu können, auch wenn diese Eingangssignale aktuell nicht anliegen. Zu diesem Zweck wird üblicherweise das Steuerungsprogramm zeitweise modifiziert, um bestimmte Ausgangswerte unabhängig vom eigentlichen Programmablauf vorgeben zu können. Analog dazu ist es eine übliche Praxis, zur Fehlersuche Variablen des Steuerungsprogramms, die eingelesene Eingangswerte widerspiegeln, durch Einfügen eines entsprechenden Programmbefehls zeitweise manuell auf einen gewünschten Wert zu setzen, um den weiteren Programmablauf für diesen Eingangswert simulieren zu können. In vielen Entwicklungsumgebungen von Steuerprogrammen ist auch ein sogenannter Debug-Modus vorgesehen, mit dessen Hilfe Variablen auf gewünschte Werte gesetzt werden können.

Aus der Druckschrift DE 199 61 478 A1 ist ein Feldbussystem bekannt, bei dem ein Busteilnehmer, z.B. ein Messumformer, unmittelbar an dem Feldbus angeschlossen ist. Der Busteilnehmer ist dazu eingerichtet, nach Erhalt bestimmter Steueranweisungen von dem Feldbus simulierte Zustandsdaten, beispielsweise Fehlermeldungen, über seiner Datenschnittstelle auf den Feldbus auszugeben. Die simulierten Zustandsdaten werden dabei zuvor von einem Steuerungsrechner über den Feldbus übertragen. Bei diesem Verfahren muss das Steuerungsprogramm des Steuerungsrechners ebenfalls so modifiziert werden, dass es die simulierten Zustandsdaten zunächst dem Busteilnehmer übermittelt und danach zu einem geeigneten Zeitpunkt abruft.

Ein Eingriff in ein Steuerungsprogramm, sei es nun manuell oder über ein Entwicklungssystem, ist jedoch aufwendig und birgt zudem die Gefahr, das Steuerprogramm über die gewünschten Manipulationen hinaus zu verändern. Zudem ist bei Inbetriebnahme einer Anlage ein manipulierbares Steuerprogramm noch nicht oder noch nicht vollständig vorhanden.

Die Druckschrift US 2010/0070748 A1 beschreibt ein Gerät, das anstelle eines I/O-Moduls an ein Bussystem anschließbar ist und das anstelle tatsächlicher Messdaten simulierbare Daten ausgibt.

Die Verwendung einer einstellbaren Strom- oder Spannungsquelle anstelle eines Sensors erfordert eine Umverdrahtung. Ebenso stellt das zeitweise Ersetzen eines I/O-Moduls durch ein Modul, das simulierte Sensordaten ausgibt, einen aufwendigen Eingriff in den Aufbau der Automatisierungsanlage dar.

Es ist eine Aufgabe der vorliegenden Erfindung, ein Verfahren zu schaffen, mit dem eine Fehlersuche in einem Remote-I/O-System vorgenommen werden kann, ohne dass ein üblicherweise eingesetztes Steuerprogramm zu diesem Zweck manipuliert werden muss und ohne dass eine zeitweise Umverdrahtung notwendig ist.

Diese Aufgabe wird gelöst durch ein Verfahren sowie ein Feldbussystem mit den jeweiligen Merkmalen der unabhängigen Ansprüche.

Bei einem erfindungsgemäßen Verfahren ist in einem Normalbetriebsmodus vorgesehen, dass ein Ausgangswert für einen Ausgangskanal mindestens eines I/O-Moduls über den Feldbus empfangen und über den Subbus an das Ein-/Ausgangsmodul weiterleitet wird, bzw. dass ein Eingangswert von dem mindestens einen I/O-Modul über den Subbus empfangen und über den Feldbus weiterleitet wird. Das Verfahren zeichnet sich dadurch aus, dass der Feldbuskoppler in einem Diagnosemodus mindestens einen vorgebbaren Ausgangswert für den Ausgangskanal des mindestens einen I/O-Moduls über den Subbus an das I/O-Modul übergibt und/oder mindestens einen vorgebbaren Eingangswert dem mindestens einen I/O-Modul zuordnet und über den Feldbus ausgibt.

In dem Diagnosemodus des Feldbuskopplers ist also vorgesehen, über den Subbus den gewünschten, vorgebbaren Ausgangswert, anstelle des Ausgangswertes, der über den Feldbus empfangen wurde, an das I/O-Modul auszugeben. Dieses erfolgt unabhängig davon, ob überhaupt ein Ausgangswert empfangen wurde und welchen Wert ein ggf. empfangener Ausgangswert hat. Der Benutzer, z.B. ein Servicetechniker erhält so die Möglichkeit, unabhängig von einem auf einem Steuerungsrechner ev. ablaufenden Steuerungsprogramm und unabhängig davon, ob der Feldbuskoppler überhaupt über einen Feldbus an einen solchen Steuerungsrechner angeschlossen ist, einen gewünschten Ausgangskanal auf den gewünschten Ausgangswert zu setzen.

Ebenso ist in dem Diagnosemodus vorgesehen, dass über den Feldbus unabhängig von einem anliegenden Eingangssignal, dem ein tatsächlicher Eingangswert entspricht, diesem Eingangskanal einen gewünschten, vorgebbaren Eingangswert zuzuordnen und anstelle des tatsächlichen Eingangswerts zu übermitteln. Auf diese Weise ist es dem Benutzer möglich, dem Steuerungsprogramm im Steuerungsrechner einen gewünschten Eingangswert für den betreffenden Eingangskanal vorzuspiegeln und in diesem Sinne ein Eingangssignal zu simulieren und so beispielsweise die Reaktion des Steuerprogramms auf diesen Eingangswert kontrollieren zu können. Weder zur Vorgabe eines gewünschten Ausgangswertes, noch zur Simulation eines gewünschten Eingangswertes ist ein Eingriff in das Steuerprogramm und/oder die Verdrahtung der I/O-Module erforderlich.

Dabei kann vorgesehen sein, dass sich der Diagnosemodus auf bestimmte Ausgangskanäle und/oder Eingangskanäle des mindestens einen Ein-/Ausgangsmoduls bezieht, wohingegen Aus- bzw. Eingangswerte anderer Ausgangskanäle und/oder Eingangskanäle gemäß dem normalen Betrieb zwischen dem Feldbus und dem Subbus übertragen werden. So können einzelne Ein- oder Ausgangswerte zu Testzwecken im laufenden Betrieb einer Anlage manipuliert werden.

In einer vorteilhaften Ausgestaltung des Verfahrens werden der vorgebbare Ausgangswert und/oder der vorgebbare Eingangswert mithilfe eines in dem Feldbuskoppler ausgeführten Webservers über einen Serviceanschluss dem Feldbuskoppler übermittelt. Bevorzugt stellt der Webserver dazu über den Serviceanschluss eine Webseite bereit, die Eingabefelder für den gewünschten Ausgangswert und/oder den gewünschten, zu simulierenden Eingangswert aufweist. Der Serviceanschluss kann beispielsweise eine an dem Feldbuskoppler vorgesehene USB-Schnittstelle sein. Weiter bevorzugt kann über den Webserver bzw. die Webseite auch zwischen dem Normal- und dem Diagnosebetriebsmodus ausgewählt werden. Die Vorgabe der gewünschten Aus- bzw. Eingangswerte ist mithilfe des Webservers komfortabel z.B. vor Ort mit einem Servicerechner möglich, ohne dass am Feldbuskoppler aufwendig Eingabemittel (z.B. Tastatur und Display) angeordnet werden müssen. Der Webserver kann zudem zu weiteren Zwecken, beispielsweise zur Konfiguration, verwendet werden.

Ein erfindungsgemäßer Feldbuskoppler ist zur Durchführung eines derartigen Verfahrens eingerichtet, beispielsweise indem eine Steuereinrichtung ein Steuerprogramm aufweist, das bei Ablauf ein derartiges Verfahren ausführt. Es ergeben sich die im Zusammenhang mit dem Verfahren genannten Vorteile.

Die Erfindung wird nachfolgend anhand von Ausführungsbeispielen mithilfe von zwei Figuren näher erläutert. Die Figuren zeigen:
- Fig. 1: eine industrielle Automatisierungsanlage in einem schematischen Blockschaltbild; und
- Fig. 2: eine Ausgestaltung eines Feldbuskopplers zur Durchführung eines anmeldungsgemäßen Verfahrens.

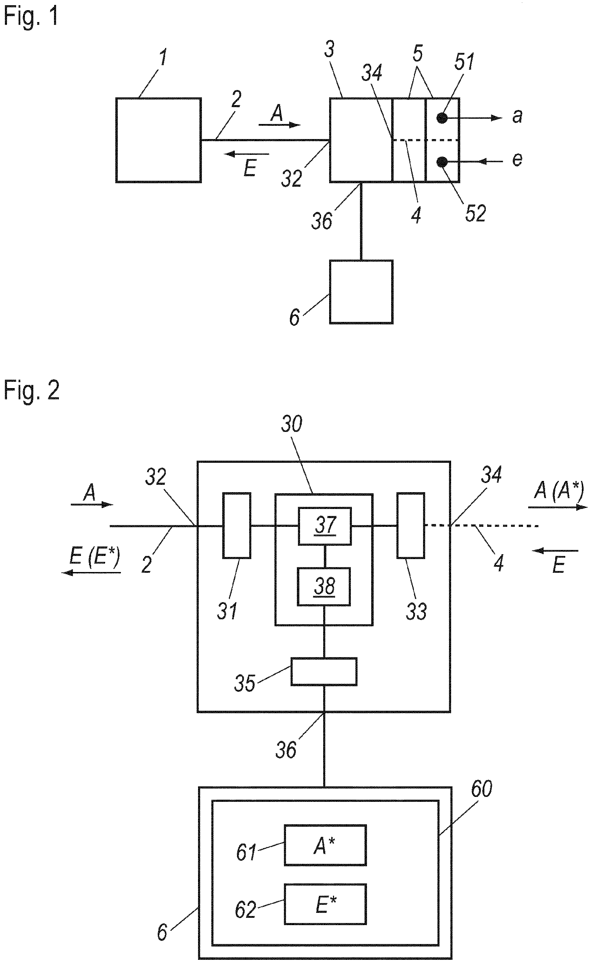

Fig. 1 zeigt in einer schematischen Darstellung einen möglichen Aufbau eines industriellen Automatisierungssystems.

Dieses weist einen Steuerungsrechner 1 auf, der über einen Feldbus 2 mit einem Feldbuskoppler 3 zum Austausch von Daten mit diesem verbunden ist. Der Feldbus kann dabei gemäß einem bekannten Standard wie beispielsweise PROFIBUS, PROFINET, EtherCAT oder CANopen ausgebildet sein.

Der Feldbuskoppler 3 setzt über den Feldbus 2 ausgetauschte Daten auf einen bevorzugt seriellen Subbus 4 um, über den I/O-Module 5 an den Feldbuskoppler 3 angekoppelt sind. Neben dem Subbus 4, der in diesem Ausführungsbeispiel nur einer Übertragung von Daten dient, kann ein weiterer, hier nicht gezeigter Bus zur Stromversorgung der I/O-Module 5 und/oder des Feldbuskopplers 3 vorhanden sein. Zur Einspeisung von Versorgungsstrom sind dann zusätzlich Stromversorgungsmodule vorgesehen, die am Ende der dargestellten Anordnung der I/O-Module 5 oder zwischen I/O-Modulen 5 oder zwischen dem Feldbuskoppler 3 und den I/O-Modulen 5 angeordnet sein können. Neben den dargestellten I/O-Modulen 5 können auch weitere Funktionsmodule an den Feldbuskoppler 3 angeschlossen sein, beispielsweise Signalwandler oder Interfacemodule.

Für eines der dargestellten I/O-Module 5 sind beispielhaft Anschlüsse eines Ein- und eines Ausgangskanals dargestellt, ein Ausgangsanschluss 51 und ein Eingangsanschluss 52. An dem Ausgangsanschluss 51 kann ein Ausgangssignal a ausgegeben werden. Das Ausgangssignal a kann ein analoges oder digitales Signal einer vorgegebenen oder einstellbaren Ausgangsspannung oder eines Ausgangsstroms sein. Als Ausgangssignal a ist ebenso ein Anschlusspaar eines Relaiskontakts zu verstehen, über das ein Ausgangsstrom geschaltet werden kann. An dem Eingangsanschluss 52 kann ein Eingangssignal e angelegt werden, das analog zum Ausgangssignal a ein analoges oder digitales Spannungs-, Strom- und/oder Widerstandssignal sein kann. Es versteht sich, dass die Anzahl von genau einem Ausgangsanschluss 51 und genau einem Eingangsanschluss 52 bei dem I/O-Modul 5 rein beispielhaft ist. Die Anzahl von Ausgangsanschlüssen bzw. Eingangsanschlüssen und damit Aus- bzw. Eingangskanälen ist beliebig.

In einem Normalbetriebsmodus des Feldbuskopplers 3 empfängt dieser über den Feldbus 2 einen Ausgangswert A, den er über den Subbus 4 an das I/O-Modul weiterleitet. Das I/O-Modul 5 gibt daraufhin auf dem entsprechenden Ausgangsanschluss 51 ein Ausgangssignal a aus, das in seiner Höhe dem angegebenen Ausgangswert A entspricht. Umgekehrt wird ein an dem Eingangsanschluss 52 anliegendes Eingangssignal e vom I/O-Modul 5 in einen Eingangswert E umgewandelt und über den Subbus 4 an den Feldbuskoppler 3 geschickt, der diesen Eingangswert E über den Feldbus 2 an den Steuerungsrechner 1 übermittelt.

Der Feldbuskoppler 3 weist zudem einen Serviceanschluss 36 auf, über den er mit einem Servicerechner 6 verbunden ist. Der Serviceanschluss 36 kann beispielsweise gemäß dem USB-Standard ausgebildet sein.

Fig. 2 zeigt den Aufbau eines anmeldungsgemäßen Feldbuskopplers 3 in einem schematischen Blockschaltbild detaillierter. Der Feldbuskoppler 3 weist als zentralen Baustein eine Steuereinrichtung 30 auf, beispielsweise einen Microcontroller. Die Steuereinrichtung 30 steht über eine Feldbusanschaltung 31 mit dem Feldbusanschluss 32 und damit dem Feldbus 2 in Verbindung und steht über eine Subbusanschaltung 33 mit dem Subbusanschluss 34 und damit dem Subbus 4 in Verbindung. Die Steuereinrichtung 30 ist durch ein Steuerprogramm 37 dazu eingerichtet, über den Feldbus 2 empfangende Daten auf den Subbus 4 umzusetzen und umgekehrt vom Subbus 4 empfangene Daten umzusetzen und über den Feldbus 2 weiterzuleiten.

Zur Verbindung mit dem Serviceanschluss 36 und damit dem Servicerechner 6 ist zudem eine Servicebusanschaltung 35 vorgesehen, die ebenfalls mit der Steuereinrichtung 30 verbunden ist. Bei Verwendung einer USB-Verbindung zwischen dem Feldbuskoppler 3 und dem Servicerechner 6 wird der Serviceanschluss 36 auch als USB-Schnittstelle und die Servicebusanschaltung 35 als USB-Controller bezeichnet.

In dem Normalbetriebsmodus des Feldbuskopplers 3 werden, wie im Zusammenhang mit Fig. 1 beschrieben, über den Feldbus 2 erhaltene Ausgangswerte A durch die Steuereinrichtung 30 ebenfalls als Ausgangswerte A auf dem Sub-bus 4 an das entsprechende I/O-Modul 5 weitergegeben. Entsprechend werden über den Subbus 4 empfangene Eingangswerte E als Eingangswerte E über den Feldbus 2 weitergegeben.

In einem Diagnosebetriebsmodul ist anmeldungsgemäß vorgesehen, für zumindest einen Ausgangskanal und/oder für zumindest einen Eingangskanal von diesem Verhalten abzuweichen. Zu diesem Zweck weist der Feldbuskoppler 3 einen Webserver 38 auf, der beispielsweise als ein Programm innerhalb der Steuereinrichtung 30 abläuft. Der Webserver 38 stellt über den Serviceanschluss 36 Informationen gemäß dem http-Protokoll (hyper text transfer protocol) zur Verfügung, anhand derer in einem Webbrowser 60, der in dem Servicerechner 6 abläuft, eine Webseite dargestellt werden kann. Diese Webseite umfasst mindestens ein Eingabefeld für einen Ausgangswert 61 und/oder ein Eingabefeld für einen Eingangswert 62. In diese Felder können vom Benutzer des Servicerechners 6 Werte eingetragen werden, vorliegend beispielhaft ein Eingangswert E* und ein Ausgangswert A*. Die eingegebenen Werte werden vom Webbrowser über den Serviceanschluss 36 dem Webserver 38 zugänglich gemacht.

In dem Diagnosemodus des Feldbuskopplers 3 ist nun vorgesehen, über den Subbus 4 den Ausgangswert A*, der in das Eingabefeld 61 für den Ausgangswert eingetragen ist, anstelle des Ausgangswertes A, der über den Feldbus 2 empfangen wurde, an das I/O-Modul 5 weiterzugeben. In Fig. 2 ist das durch die in Klammern gesetzten Werte symbolisiert. Die Substitution der Werte erfolgt unabhängig davon, ob überhaupt ein Ausgangswert A für diesen Ausgangsanschluss 51 über den Feldbus 2 erhalten wurde und welchen Wert ein ggf. empfangener Ausgangswert A hat. Der Benutzer des Servicerechners 6 erhält so die Möglichkeit, unabhängig von einem auf dem Steuerungsrechner 1 ablaufenden Steuerungsprogramm und unabhängig davon, ob der Feldbuskoppler 3 überhaupt über einen Feldbus 2 an einen solchen Steuerungsrechner angeschlossen ist, einen gewünschten Ausgangskanal auf den gewünschten Ausgangswert A* zu setzen.

Ebenso ist in dem Diagnosemodus vorgesehen, dass über den Feldbus 2 unabhängig von einem am Eingangsanschluss 52 anliegenden Eingangssignal e, dem ein tatsächlicher Eingangswert E entspricht, diesem Eingangskanal den im Eingabefeld 62 eingegebenen gewünschten Eingangswert E* zuzuordnen und anstelle des Eingangswerts E zu übermitteln. Auf diese Weise ist es dem Benutzer des Servicerechners 6 möglich, dem Steuerungsprogramm im Steuerungsrechner 1 einen gewünschten Eingangswert E* für den betreffenden Eingangskanal vorzuspiegeln und in diesem Sinne ein Eingangssignal zu simulieren und so beispielsweise die Reaktion des Steuerprogramms auf diesen Eingangswert E* kontrollieren zu können.

Dabei kann vorgesehen sein, dass alle weiteren Ausgangskanäle in dem betreffenden I/O-Modul 5 oder auch in weiteren I/O-Modulen nach wie vor die Werte annehmen, die vom Steuerungsrechner 1 über den Feldbus 2 gesetzt wurden. Ebenso ist es möglich, dass alle weiteren an anderen Eingangsanschlüssen des I/O-Moduls 5 oder an anderen Eingangsanschlüssen eingelesenen Eingangswerte über den Feldbus 2 an den Steuerungsrechner 1 weitergeleitet werden. Alternativ kann vorgesehen sein, dass in dem Diagnosemodus nur die innerhalb des Webbrowsers 60 in den entsprechenden Feldern gesetzten Werte übermittelt werden, wobei für nicht gesetzte Werte Default-Werte, beispielsweise null, angenommen werden.

Die beschriebene Funktionalität zum Setzen von gewünschten Ein- und Ausgangswerten E*, A* kann eine von mehreren Funktionalitäten des Webservers 38 sein. Dieser kann zudem für bekannte Konfigurations- und Protokollzwecke verwendet werden. Da insbesondere mit dem Setzen von Ausgangswerten, aber auch mit dem Vorgeben von Eingangswerten, die Gefahr einer Fehlfunktion der zu steuernden Anlage verbunden ist, kann vorgesehen sein, dass die anmeldungsgemäße Funktionalität mit besonderen Sicherheitsvorrichtungen gegen unautorisierten Gebrauch geschützt ist. Beispielsweise kann die Webseite, die die Eingabefelder 61, 62 bereitstellt, erst nach besonderer Authentifizierung erreichbar sein.

### Bezugszeichenliste

- 1: Steuerungsrechner
- 2: Feldbus
- 3: Feldbuskoppler
- 4: Subbus
- 5: I/O-Modul
- 6: Servicerechner

- 30: Steuereinrichtung
- 31: Feldbusanschaltung
- 32: Feldbusanschluss
- 33: Subbusanschaltung
- 34: Subbusanschluss
- 35: Servicebusanschaltung
- 36: Servicebusanschluss
- 37: Steuerprogramm
- 38: Webserver

- 51: Ausgangsanschluss
- 52: Eingangsanschluss

- 60: Webbrowser
- 61: Eingabefeld für Ausgangswert
- 62: Eingabefeld für Eingangswert

## Patentansprüche

1. Verfahren zum Betreiben eines Feldbuskopplers (3) zur Anbindung von Ein-/Ausgangsmodulen (5) an einen Feldbus (2) eines industriellen Automatisierungssystems über einen Subbus (4), wobei der Feldbuskoppler (3) in einem Normalbetriebsmodus
- einen Ausgangswert (A) für einen Ausgangskanal mindestens eines Ein-/Ausgangsmoduls (5) über den Feldbus (2) empfängt und über den Subbus (4) an das Ein-/Ausgangsmodul (5) weiterleitet und/oder
- einen Eingangswert (E) von dem mindestens einen Ein-/Ausgangsmodul (5) über den Subbus (4) empfängt und über den Feldbus (2) weiterleitet,
**dadurch gekennzeichnet, dass**
der Feldbuskoppler (3) in einem Diagnosemodus zumindest einen der folgenden Schritte ausführt:
1.) mindestens einen vorgebbaren Ausgangswert (A*) für den Ausgangskanal des mindestens einen Ein-/Ausgangsmoduls (5) über den Sub-bus (4) an das Ein-/Ausgangsmodul (5) übergibt und/oder
2.) mindestens einen vorgebbaren Eingangswert (E*) dem mindestens einen Ein-/Ausgangsmodul (5) zuordnet und über den Feldbus (2) ausgibt.
Wobei beide Verfahrensschritte 1.) und 2.) vom Feldbuskoppler (3) ausführbar sind.

2. Verfahren nach Anspruch 1, bei dem der vorgebbare Ausgangswert (A*) und/oder der vorgebbare Eingangswert (E*) mithilfe eines in dem Feldbuskoppler (3) ausgeführten Webservers (38) über einen Serviceanschluss (36) dem Feldbuskoppler (3) übermittelt wird.

3. Verfahren nach Anspruch 2, bei dem der Webserver (38) über den Serviceanschluss (36) eine Webseite (60) bereitstellt, die Eingabefelder (61, 62) für den vorgebbaren Ausgangswert (A*) und/oder den vorgebbaren Eingangswert (E*) aufweist.

4. Verfahren nach Anspruch 2 oder 3, bei dem über den Webserver (38) zwischen Normal- und Diagnosebetriebsmodus ausgewählt wird.

5. Verfahren nach einem der Ansprüche 1 bis 4, bei dem sich der Diagnosemodus auf bestimmte Ausgangskanäle und/oder Eingangskanäle des mindestens einen Ein-/Ausgangsmoduls (5) bezieht, wohingegen Aus- bzw. Eingangswerte anderer Ausgangskanäle und/oder Eingangskanäle gemäß dem normalen Betrieb zwischen dem Feldbus (2) und dem Subbus (4) übertragen werden.

6. Feldbuskoppler (3) zur Anbindung von Ein-/Ausgangsmodulen (5) an einen Feldbus (2) eines industriellen Automatisierungssystems über einen Sub-bus (4), wobei der Feldbuskoppler in einem Normalbetriebsmodus dazu eingerichtet ist,
- einen Ausgangswert (A) für einen Ausgangskanal mindestens eines Ein-/Ausgangsmoduls (5) über den Feldbus (2) zu empfangen und über den Subbus (4) an das Ein-/Ausgangsmodul (5) weiterzuleiten und/oder
- einen Eingangswert (E) von dem mindestens einen Ein-/Ausgangsmodul (5) über den Subbus (4) zu empfangen und über den Feldbus (2) weiterzuleiten,
**dadurch gekennzeichnet, dass**
der Feldbuskoppler (3) dazu eingerichtet ist, in einem Diagnosemodus zumindest einen der folgenden Schritte auszuführen:
1.) mindestens einen vorgebbaren Ausgangswert (A*) für den Ausgangskanal des mindestens einen Ein-/Ausgangsmoduls (5) über den Sub-bus (4) an das Ein-/Ausgangsmodul (5) zu übergeben und/oder
2.) mindestens einen vorgebbaren Eingangswert (E*) dem mindestens einen Ein-/Ausgangsmodul (5) zuzuordnen und über den Feldbus (2) auszugeben.
Wobei beide Verfahrensschritte 1.) und 2.) vom Feldbuskoppler (3) ausführbar sind.

7. Feldbuskoppler (3) nach Anspruch 6, aufweisend einen Webserver (38) zur Bereitstellung einer Webseite (60) mit Eingabefeldern (61, 62) für den mindestens einen vorgebbaren Ausgangswert (A*) und/oder den mindestens einen vorgebbaren Eingangswert (E*).

8. Feldbuskoppler (3) nach Anspruch 7, aufweisend einen Serviceanschluss (36), über den der Webserver (38) die Webseite (60) bereitstellt.

9. Feldbuskoppler (3) nach Anspruch 8, bei dem der Serviceanschluss (36) eine USB-Schnittstelle ist.

## Claims

1. A method for operating a fieldbus coupler (3) for connecting input/output modules (5) to a fieldbus (2) of an industrial automation system via a sub-bus (4), wherein in a normal operating mode the fieldbus coupler (3)
- receives an output value (A) for an output channel of at least one input/output module (5) via the fieldbus (2) and forwards said value via the sub-bus (4) to the input/output module (5) and/or
- receives an input value (E) from the at least one input/output module (5) via the sub-bus (4) and forwards said value via the fieldbus (2),
**characterized in that**
in a diagnostic mode the fieldbus coupler (3) performs at least one of the following steps:
1.) transmitting at least one definable output value (A*) for the output channel of the at least one input/output module (5) to the input/output module (5) via the sub-bus (4) and/or
2.) assigning at least one definable input value (E*) to the at least one input/output module (5) and outputs said value via the fieldbus (2), wherein both method steps 1.) and 2.) are executable by the fieldbus coupler (3).

2. The method according to claim 1, in which the definable output value (A*) and/or the definable input value (E*) is transmitted via a service port (36) to the fieldbus coupler (3) with the help of a web server (38) which is run in the fieldbus coupler (3).

3. The method according to claim 2, in which the web server (38) provides a web page (60) via the service port (36), which web page has input fields (61, 62) for the definable output value (A*) and/or the definable input value (E*).

4. The method according to claim 2 or 3, in which a selection between normal and diagnostic operating mode is made via the web server (38).

5. The method according to any one of claims 1 to 4, in which the diagnostic mode involves certain output channels and/or input channels of the at least one input/output module (5), while output values and input values of other output channels and/or input channels are transmitted according to normal operation between the fieldbus (2) and the sub-bus (4).

6. A fieldbus coupler (3) for connecting input/output modules (5) to a fieldbus (2) of an industrial automation system via a sub-bus (4), said fieldbus coupler being configured such that in a normal operating mode it
- receives an output value (A) for an output channel of at least one input/output module (5) via the fieldbus (2) and forwards said value via the sub-bus (4) to the input/output module (5) and/or
- receives an input value (E) from the at least one input/output module (5) via the sub-bus (4) and forwards said value via the fieldbus (2),
**characterized in that**
the fieldbus coupler (3) is configured for performing at least one of the following steps in a diagnostic mode:
1.) transmitting at least one definable output value (A*) for the output channel of the at least one input/output module (5) via the sub-bus (4) to the input/output module (5) and/or
2.) assigning at least one definable input value (E*) to the at least one input/output module (5) and outputs said value via the fieldbus (2), wherein both method steps 1.) and 2.) are executable by the fieldbus coupler (3).

7. The fieldbus coupler (3) according to claim 6, having a web server (38) for providing a web page (60) which has input fields (61, 62) for the at least one definable output value (A*) and/or for the at least one definable input value (E*).

8. The fieldbus coupler (3) according to claim 7, having a service port (36) via which the web server (38) provides the web page (60).

9. The fieldbus coupler (3) according to claim 8, in which the service port (36) is a USB interface.

## Revendications

1. Procédé de fonctionnement d'un coupleur de bus de terrain (3) servant à connecter des modules d'entrée/sortie (5) à un bus de terrain (2) d'un système d'automatisation industrielle via un sous-bus (4), dans lequel le coupleur de bus de terrain (3), dans un mode de fonctionnement normal,
- reçoit une valeur de sortie (A) pour un canal de sortie d'au moins un module d'entrée/sortie (5) via le bus de terrain (2) et la transmet au module d'entrée/sortie (5) via le sous-bus (4) et/ou
- reçoit une valeur d'entrée (E) dudit au moins un module d'entrée/sortie (5) via le sous-bus (4) et la transmet via le bus de terrain (2),
**caractérisé en ce que**
le coupleur de bus de terrain (3), dans un mode de diagnostic, exécute au moins l'une des étapes suivantes consistant à :
1.) transférer au moins une valeur de sortie prédéfinissable (A*) pour le canal de sortie dudit au moins un module d'entrée/sortie (5) au module d'entrée/sortie (5) via le sous-bus (4) et/ou
2.) associer au moins une valeur d'entrée prédéfinissable (E*) audit au moins un module d'entrée/sortie (5) et la délivrer via le bus de terrain (2),
les deux étapes de procédé 1.) et 2.) pouvant être exécutées par le coupleur de bus de terrain (3).

2. Procédé selon la revendication 1, dans lequel la valeur de sortie prédéfinissable (A*) et/ou la valeur d'entrée prédéfinissable (E*) est transmise au coupleur de bus de terrain (3) via un port de service (36) à l'aide d'un serveur web (38) exécuté dans le coupleur de bus de terrain (3).

3. Procédé selon la revendication 2, dans lequel le serveur web (38) fournit, via le port de service (36), une page web (60) qui présente des champs de saisie (61, 62) pour la valeur de sortie prédéfinissable (A*) et/ou la valeur d'entrée prédéfinissable (E*).

4. Procédé selon la revendication 2 ou 3, dans lequel le choix entre mode de fonctionnement normal et mode de diagnostic s'effectue via le serveur web (38).

5. Procédé selon l'une des revendications 1 à 4, dans lequel le mode de diagnostic concerne certains canaux de sortie et/ou canaux d'entrée dudit au moins un module d'entrée/sortie (5), tandis que les valeurs de sortie ou d'entrée d'autres canaux de sortie et/ou canaux d'entrée sont transmises entre le bus de terrain (2) et le sous-bus (4) selon le fonctionnement normal.

6. Coupleur de bus de terrain (3) servant à connecter des modules d'entrée/sortie (5) à un bus de terrain (2) d'un système d'automatisation industrielle via un sous-bus (4), le coupleur de bus de terrain étant conçu pour, dans un mode de fonctionnement normal,
- recevoir une valeur de sortie (A) pour un canal de sortie d'au moins un module d'entrée/sortie (5) via le bus de terrain (2) et la transmettre au module d'entrée/sortie (5) via le sous-bus (4) et/ou
- recevoir une valeur d'entrée (E) dudit au moins un module d'entrée/sortie (5) via le sous-bus (4) et la transmettre via le bus de terrain (2),
**caractérisé en ce que**
le coupleur de bus de terrain (3) est conçu pour, dans un mode de diagnostic, exécuter au moins l'une des étapes suivantes consistant à :
1.) transférer au moins une valeur de sortie prédéfinissable (A*) pour le canal de sortie dudit au moins un module d'entrée/sortie (5) au module d'entrée/sortie (5) via le sous-bus (4) et/ou
2.) associer au moins une valeur d'entrée prédéfinissable (E*) audit au moins un module d'entrée/sortie (5) et la délivrer via le bus de terrain (2),
les deux étapes de procédé 1.) et 2.) pouvant être exécutées par le coupleur de bus de terrain (3).

7. Coupleur de bus de terrain (3) selon la revendication 6, présentant un serveur web (38) pour fournir une page web (60) avec des champs de saisie (61, 62) pour ladite au moins une valeur de sortie prédéfinissable (A*) et/ou ladite au moins une valeur d'entrée prédéfinissable (E*).

8. Coupleur de bus de terrain (3) selon la revendication 7, présentant un port de service (36) via lequel le serveur web (38) fournit la page web (60).

9. Coupleur de bus de terrain (3) selon la revendication 8, dans lequel le port de service (36) est une interface USB.
